# EUROPEAN PATENT APPLICATION

(11) **EP 4 403 755 A1**
(43) Date of publication of application: **24.07.2024**
(21) Application number: 23152572.6
(22) Date of filing: 20.01.2023
(51) Int. Cl.: F01N 3/00, F01N 9/00, F01N 3/021, B01D 53/04, B60K 35/00

(54) **AIR TREATMENT SYSTEM, METHOD, VEHICLE AND FLEET FOR TREATING ENVIRONMENT AIR**

(71) Applicant: MANN+HUMMEL Ventures Pte. Ltd., Singapore 139234 (SG)
(72) Inventor: THEBAULT, Eric, 71640 Ludwigsburg (DE); JUNGINGER, Bernd, 70565 Stuttgart (DE); DOS SANTOS ASCENSAO, Macario Francisco, 71696 Möglingen (DE)
(74) Representative: Mann + Hummel Intellectual Property

(57) **Abstract**

Method of treating environmental air including:- determining that there is an air treatment demand at a demand vehicle by determining that there is a local treatment requirement of the demand vehicle which is unsatisfied; - sending, a request for air treatment to a supply vehicle;- receiving an acknowledgement; wherein determining further includes determining that a traffic density is above a pre-determined density. Emission regulation system including: -a holder for receiving a replaceable air filter; -an airflow control device; -a control circuit: -a communication interface configured to wirelessly send and receive commands external to the vehicle and operably coupled to the control circuit; the control circuit configured to: receive a request for air treatment. Fleet of vehicles operably communicable with each other, wherein a first vehicle is configured to requesting a second vehicle to provide air treatment, and the second vehicle is configured to control an air treatment system of the second vehicle to increase treatment capacity.

## Description

### Technical Field

An aspect of the disclosure concerns an air treatment system for treating environment air. An aspect of the disclosure relates to a method of treating environmental air. Another aspect of the disclosure relates to an emission regulation system. Another aspect of the disclosure relates to a vehicle.

### Background Art

Due to progressive urbanization, the problem exists that the ambient air can exceed limit values for particulate matter and/or gases such as ozone, NOx, CO many times over, especially due to high density road traffic conditions.

The problem of traffic-related emissions has recently been exacerbated by calls for driving bans for certain groups of vehicles, especially diesel cars, in areas of particularly high air pollution due to their NOx and particular matter emissions. Ambient air filtration has been proposed in DE202006019335 U1 to reduce the net emission footprint of an internal combustion vehicle and requires that the internal combustion vehicle has an air filter which may have limited air treatment capacity. Not all internal combustion vehicles have such a system and may thus not fulfill emission criteria due to the high generation of emissions.

Therefore, there persists the problem to provide for improved air cleaning.

### Summary

An aspect of the disclosure relates to a method of treating environmental air. The method may include determining that there is an air treatment demand at a demand vehicle's surroundings by determining that there is a local treatment requirement of the demand vehicle which is unsatisfied, for example, a certain emission limit may be required but may be not met by the demand vehicle. The method may include sending, by the demand vehicle, a request for air treatment by a communication interface to a supply vehicle. The method may include receiving, by the demand vehicle, an acknowledgement from the supply vehicle. Determining that there is an air treatment demand may further (i.e., in addition to determining that there is a local treatment requirement of the demand vehicle which may be unsatisfied) include determining that a traffic density at a demand vehicle's surroundings is above a pre-determined density.

An aspect of the disclosure relates to an emission regulation system, for a vehicle. The emission regulation system may include a holder for receiving a replaceable air filter, emission regulation system may include an airflow control device, for example, a duct, a bypass, a shutter, a blower, a combination thereof. The emission regulation system may include a control circuit. The emission regulation system may include a communication interface configured to wirelessly send and receive commands external to the vehicle and operably coupled to the control circuit. The control circuit may be configured to receive a request for air treatment, which request originate external to the vehicle, e.g., from a demand vehicle. The control circuit may be configured to determine whether current emissions of the vehicle are below a pre-determined limit and whether there is available capacity. In examples, the availability of capacity question may be answered as yes when the air filter is not fully loaded and one of: the air treatment system is not in operation, or the air treatment system is operating below maximum capacity (e.g., blower is operating below 100%). In embodiments, available capacity relates to capacity on the vehicle. In embodiments, available capacity may also be named as additional treatment capacity available.

An aspect of the disclosure relates to a vehicle including the emission regulation system according to various embodiments.

An aspect of the disclosure relates to a fleet of two or more vehicles, the two or more vehicles operably communicable with each other, wherein a first vehicle is configured to requesting a second vehicle to provide air treatment, and wherein the second vehicle is configured to receive the request and control an air treatment system of the second vehicle to increase treatment capacity. Each of the two or more vehicles being a vehicle including the emission regulation system according to various embodiments.

### Brief Description of Drawings

The drawings show:
FIG. 1 shows a demand vehicle 2 and a supply vehicle 1' and their possible interaction in accordance with various embodiments;
FIG. 2 shows a flow chart for a method of air treatment;
FIG. 3 illustrates a schematic comprising a plurality of vehicles, within a pre-determined distance DIST1 of demand vehicle 2;
FIG. 4 to FIG. 7 are used to explain different embodiments for determining whether there is a high traffic density at a location surrounding the demand vehicle 2, these embodiments may also be combined in the method or system;
FIG. 8 illustrates an embodiment in which 3 vehicles C1, 2, and C3 have essentially identical velocity vectors and thus form a platoon;
FIG. 9 illustrates a method 100 comprising steps that may be performed on the supply vehicle 1';
FIG. 10 is used to illustrated how the method of treating environmental air may be run concomitantly for the demand vehicle 2 and the supply vehicle 1';
FIG. 11 illustrates an exemplary an emission regulation system 7, for a vehicle 1;
FIG. 12 illustrates an exemplary fleet 50 of two or more vehicles 2, 1', the two or more vehicles 2, 1' operably communicable with each other;
FIG. 13 shows a fleet of vehicles for illustration purposes;
FIG. 14 shows a schematic illustration of a fleet including vehicles 1' and 2 in accordance with various embodiments; and
FIG. 15 shows a schematic of another embodiment of emission regulation system 7 for cleaning environmental air.

### Detailed Description

An aspect of the disclosure relates to a **method of treating environmental air.** The method may include determining that there is an air treatment demand at a demand vehicle's surroundings by determining that there is a local treatment requirement of the demand vehicle which is unsatisfied, for example, a certain emission limit may be required but may be not met by the demand vehicle. The method may include sending, by the demand vehicle, a request for air treatment by a communication interface to a supply vehicle. The method may include receiving, by the demand vehicle, an acknowledgement from the supply vehicle. Determining that there is an air treatment demand may further (i.e., in addition to determining that there is a local treatment requirement of the demand vehicle which may be unsatisfied) include determining that a traffic density at a demand vehicle's surroundings is above a pre-determined density.

According to some embodiments, the method may include receiving, by a communication interface of a supply vehicle, a request for treatment, from a demand vehicle and only if received proceed with determining that there is an air treatment demand. The method may include sending, by the demand vehicle, the request for air treatment by a communication interface to a supply vehicle. The method may further include receiving, by the demand vehicle, an acknowledgement from the supply vehicle. The method may include sending, by the supply vehicle, the acknowledgement for air treatment by a communication interface to a demand vehicle.

According to various embodiments, receiving a request for treatment may include receiving data indicative of a demand. Determining that an air treatment system has additional treatment capacity available may include determining that the additional treatment capacity is greater or equal to the demand.

According to various embodiments, the method may further include before controlling the air treatment system to increase treatment capacity, receiving a request confirmation, optionally including a microtransaction (such as a micropayment) or micropayment indication data. The acknowledgement may include data indicative of a cost rate of the additional treatment capacity.

According to various embodiments, the request for treatment may include a pre-determined distance, time, velocity vector, or a combination thereof.

As used herein and in accordance with various embodiments, "surroundings" of a vehicle may mean an area within a pre-determined distance.

As used herein and in accordance with various embodiments, speed may include the meaning of velocity vector and may include the meaning of scalar speed. In various embodiments, implementation of the methods and systems disclosed herein may be simpler when utilizing scalar speed, however, the disclosure is not limited thereto. In some embodiments, the speed may be an averaged speed, for example, average of a plurality of data points taken at different times within a time window, for example, a time window having a duration selected from 1 minute or less, such as, 5 seconds or less.

According to various embodiments, determining a traffic density within a pre-determined distance from a demand vehicle may be, or may be based on, a number of vehicles within the pre-determined distance. According to various embodiments, determining a traffic density within a pre-determined distance from a demand vehicle may be, or may be based on, a number of vehicles within the pre-determined distance. For example, it may be based on summing the number of vehicles except the demand vehicle, summing the number of vehicles except the supply vehicle, or summing the number of all vehicles including the demand vehicle and the supply vehicle. The sum obtained from the summation may be compared to a pre-determined value, for example, a number selected from 20 or below, such as 10 or below, and preferably larger than 2. Or in another example, a density of vehicles per unit area may be compared to a pre-determined density, such as, selected from the range of 50 vehicles / km² or less, or 20 vehicles / km² or less, preferably more than 5. A density per unit area may be used, e.g., in urban area. In yet another example, a density of vehicles per length of a road, such as, selected from the range of 50 vehicles / per km or less, or 20 vehicles / per km or less, preferably more than 5. A linear length of a road may be used, e.g., in highways. According to some embodiments, the sum may include vehicles traveling in a same direction (e.g., in a same lane) to the exclusion of vehicles traveling in the opposite direction.

According to various embodiments, a distance of a vehicle to the demand vehicle may be calculated by obtaining the position of said vehicle and said demand vehicle, and calculating a distance between both positions. Alternatively, a distance of a vehicle to the demand vehicle may be determined by sonar, radar, lidar, for example using time-of-flight measurements of one way signals (including clock synchronization on both vehicles) or of reflected signals.

According to various embodiments, a position of a vehicle may be determined by based on a global coordinate positioning system, for example, agps, mobile gps, galileo, equivalents, or a combination thereof.

According to various embodiments, a pre-determined distance may be a (virtual) circle centered (or otherwise located in relation to) a point of reference, e.g., on the demand vehicle, with a radius. The radius may be pre-determined, for example, selected from a range of 2 km to 0 m, or 2 km to 2 m, for example, 2 km, 1 km, 500 m, 100 m, or 50 m.

According to some embodiments, a pre-determined distance may disregard (e.g., filter out) vehicles on a different road, or even vehicles in a different lane.

According to various embodiments, determining a traffic density within a pre-determined distance from a demand vehicle may further include determining that the speeds of the surrounding vehicles (optionally including and that the speed of the demand vehicle) are under a pre-determined minimum speed, and disregarding (e.g., filtering out) the vehicles that are not under the pre-determined minimum speed. In examples, the number of vehicles under pre-determined minimum speed may be combined with the (total) number of vehicles with a logical AND, or otherwise filtered. A determination of whether the motor is on, which may include the meaning of being nominally on, may be used to only consider the surrounding vehicles for which the motor is on. A determination of whether the vehicle is parked, may be used to only consider the surrounding vehicles which are not parked. This may avoid that vehicles parked near a dense traffic area have their air filters loaded in a short span of time while they are parked.

According to various embodiments, determining a traffic density within a pre-determined distance from a demand vehicle may include determining that at least a pre-determined number of vehicles within a pre-determined distance is platooning with the demand vehicle. And may further include disregarding (e.g., filtering out) vehicles that are not platooning or only considering said number of vehicles within a pre-determined distance is platooning. In examples, the number of vehicles platooning may be combined with the (total) number of vehicles with a logical AND, or otherwise filtered.

According to various embodiments, determining a traffic density within a pre-determined distance from a demand vehicle may include determining that at least a pre-determined number of vehicles within a pre-determined distance have a dwell time greater than a pre-determined threshold. The method may further include disregarding (e.g., filtering out) vehicles that do not have a dwell time greater than the pre-determined threshold. In examples, the number of vehicles having a dwell time greater than a pre-determined threshold may be combined with the (total) number of vehicles with a logical AND, or otherwise filtered. As used herein and in accordance with various embodiments, a dwell time is the time a vehicle spend within a pre-determined distance, in some examples it may be determined for a surrounding vehicle as the difference of the time at a relative exit point minus the time at a relative entry point, relative here may mean relative to the vehicle, since all the vehicles may be moving. In other examples a time of a surrounding vehicle may be an integral of instances in which the vehicle is found within the pre-determined distance, each instance having for example a smaller fixed time window, and the integral being over a larger time window (smaller and larger here are simply in relation to each other). As used herein and in accordance with various embodiments, the dwell time may also be named herein as residence time,and is not limited to meaning stationary vehicles.

The method may include one, two, or all of: (i) determining that the speeds of the surrounding vehicles (optionally including and that the speed of the demand vehicle) may be under a pre-determined minimum speed; (ii) determining that at least a pre-determined number of vehicles within a pre-determined distance is platooning with the demand vehicle; and (iii) determining that at least a pre-determined number of vehicles within a pre-determined distance have a dwell time greater than a pre-determined threshold. For example, they (said one, two, or all) may be combined by logical OR. For example the determining a traffic density within a pre-determined distance from a demand vehicle returns positive if at least one of (i), (ii), (iii) are positive. According to various embodiments, a density of vehicles may be a sum of all vehicles satisfying (i), (ii), and/or (iii). The method may further include counting unique vehicles, to avoid double counting vehicles that satisfy more than one of (i), (ii), and (iii).

According to various embodiments, determining a traffic density within a pre-determined distance from a demand vehicle may further include receiving emission data from the vehicles within a pre-determined distance; and may further include determining that a sum of emissions from the vehicles within the pre-determined distance is above a pre-determined emissions limit. The emissions may be net emissions. In an example, for a plurality of cars, a sum of net emissions may be calculated and then compared with a sum of the net emission limits, and determined whether the sum of net emissions is below the sum of the net emission limits.

As used herein and in accordance with various embodiments, emissions (e.g., as in net emissions, emission rate, or net emission rate) when used in connection to a vehicle may refer to an emission rate, for example, emission of a pollutant over a unit of time, or emission of a pollutant over a unit of distance.

In some embodiments, determining that there is a local treatment requirement of the demand vehicle which is unsatisfied include a combination of two or more of various embodiments of determining a traffic density as disclosed herein.

According to some embodiments determining that a traffic density at a demand vehicle's surroundings is above a pre-determined density may be performed on the demand vehicle. According to some embodiments determining that a traffic density at a demand vehicle surroundings is above a pre-determined density may be performed on the supply vehicle.

According to some embodiments determining that a traffic density at a demand vehicle's surroundings is above a pre-determined density may be performed on a remote processor, such as, of a cloud. The cloud may be configured to receive traffic data over time and the processor may be configured to determine that there is a high number of vehicle passes of vehicles at a position of the demand vehicle. This determination may be for a pre-determined time window, which may be fixed, for example, one day, from 00:00 to 23:59 hours, or may be rolling, for example, the last 20 minutes before a current time of the demand vehicle. In examples, a fixed time may be selected from a range of 24h or less, for example, 2h or less. In other examples, a rolling time may be selected from a range of 24h or less, for example, 2h or less, such as, 20 minutes or less. According to various embodiments, the position of the demand vehicle may be a past position and/or a future position, or, it may be a current position and the vehicle passes of vehicles at the current positions may be past and/or a future passes.

According to various embodiments, determining that there is a local treatment requirement of the demand vehicle which is unsatisfied may be performed on the demand vehicle, for example, by comparing a nominal emission rate of the demand vehicle with a pre-determined required emission limit.

According to various embodiments, the method of treating environmental air may further include: receiving, on the supply vehicle, a request for treatment including receiving data indicative of a demand, and determining (e.g., on the supply vehicle) that the air treatment system has additional treatment capacity available. The method may further include determining that the additional treatment capacity is greater or equal to the demand.

According to various embodiments, controlling the air treatment system to increase treatment capacity may mean to increase the treatment capacity by the additional treatment capacity. The method may further include by the control circuit of the supply vehicle, controlling the air treatment system (e.g. the airflow control device) of the supply vehicle to increase treatment capacity.

According to various embodiments, the method of treating environmental air may further include: recording, on a local memory of the supply vehicle and/or on a local memory of the demand vehicle, data indicative of the additional treatment capacity utilized, optionally, the acknowledgement may include data indicative of an additional treatment capacity. Recording may include the meaning of storing. In examples, the memory may be implemented as any electronic circuit capable of storing information, such as based on D-flip-flips, and/or flash memory. In examples, the memory may be, without limitation, a local memory, a remote memory, a cache, a general purpose register, a register of a communication interface, or a combination thereof. According to various embodiments, the acknowledgement may include data indicative of an additional treatment capacity.

According to various embodiments, the method may include sending, from the supply vehicle, data indicative of the additional treatment capacity utilized.

According to various embodiments, the method may include receiving, by the demand vehicle, the data indicative of the additional treatment utilized.

As used herein and in accordance with various embodiments, an emission regulation system may include an air treatment system. In some embodiments, the emission regulation system may include further aspects, for example, it may be able to control emissions of a fleet.

As used herein and in accordance with various embodiments, an air treatment system may include an airflow control device and an air filter, e.g., a particulate filter. As used herein and in accordance with various embodiments, an emissions regulation system may include the meaning of an air treatment system, which may be vehicle based. In some embodiments, the emission regulation system may be more than an air treatment system that is vehicle based and may include computing and communication systems external to a vehicle. Thus, details and embodiments explained herein to an air treatment system also apply to an emission regulation system comprising or consisting of such air treatment system.

An aspect of the disclosure relates to an emission regulation system, for a vehicle, such as, for example, an air treatment system comprising an air filter. The emission regulation system may include a holder for receiving a replaceable air filter. emission regulation system may include an airflow control device, for example, a duct, a bypass, a shutter, a blower, a combination thereof. The emission regulation system may include a control circuit. The emission regulation system may include a communication interface configured to wirelessly send and receive commands external to the vehicle and operably coupled to the control circuit. The control circuit may be configured to receive a request for air treatment, which request originate external to the vehicle, e.g., from a demand vehicle. The control circuit may be configured to determine whether current emissions of the vehicle are below a pre-determined limit and whether there is available capacity. In examples, the availability of capacity question may be answered as yes when the air filter is not fully loaded and one of: the air treatment system is not in operation, or the air treatment system is operating below maximum capacity (e.g., blower is operating below 100%). In embodiments, available capacity relates to capacity on the vehicle. In embodiments, available capacity may also be named as additional treatment capacity available.

The control circuit may be configured to control the airflow control device to utilize at least part of the available capacity. In some embodiments, the control circuit may be configured to determine that the request is received, the current emissions of the vehicle are below the pre-determined limit, and there is available capacity, and if said determinations are all positive, to control the airflow control device to utilize at least part of the available capacity.

In examples, to control the airflow control device to utilize at least part of the available capacity may mean one or more of: turn on the air treatment system, open a shutter which is in-stream with an air filter, close bypass of an air filter, increase a blower speed, a combination thereof.

According to various embodiments, the control circuit may be configured to, via the communication interface, send an acknowledgement that additional treatment capacity is available. According to various embodiments, the control circuit may be further configured to control the airflow control device to increase treatment capacity.

According to various embodiments, the control circuit may be further configured to determine if there is treatment demand when a local treatment requirement is unsatisfied. According to various embodiments, the control circuit may be further configured to, if there is a treatment demand, via the communication interface, send a request for remote treatment capacity, and may further be configured to receive an acknowledgment. According to various embodiments, the control circuit may be further configured to, if there is a treatment demand, provide on a memory data indicative of the additional treatment capacity utilized. The control circuit may be further configured to provide (e.g., record) data indicative of the additional treatment capacity utilized on a memory. In examples, the memory may be implemented as any electronic circuit capable of storing information, such as based on D-flip-flips, and/or flash memory. In examples, the memory may be, without limitation, a local memory, a remote memory, a cache, a general purpose register, a register of a communication interface, or a combination thereof.

According to various embodiments, the control circuit may be further configured to determine whether current emissions of the vehicle exceeds a pre-determined limit. According to various embodiments, the control circuit may be further configured to if determined that the current emissions of the vehicle exceeds a pre-determined limit, send a request for air treatment by a communication interface to a supply vehicle. According to various embodiments, the control circuit may be further configured to receive an acknowledgement from the supply vehicle.

According to various embodiments, the control circuit may be further configured to determine whether a traffic density at surroundings of vehicle is above a pre-determined density, and control the on-board air treatment system to utilize at least part of the available capacity only if the determination is positive. This allows for local reduction of peak emission concentrations in the environment, even if in certain cases a net vehicle's emission limit may not be met, there is still a total reduction. Use of air treatment only in peak conditions also extends the useful life of an air treatment system, e.g., of an air filter.

According to various embodiments the control circuit may be further configured to:
(i) determine whether a traffic density at surroundings of vehicle may be above a pre-determined density; and
(ii) determine whether there may be additional available capacity, and
if the request for air treatment is received, and if both determinations are positive:
control the airflow control device to utilize at least part of the additional available capacity. In this embodiment, the air treatment system may operate in various conditions, for example, it may operate at a first level, if request is received, operate on a second, higher level, in which additional capacity is utilized in case of high traffic density. In this case, the vehicle's emission limit may be met at non-high density traffic, and additionally, peak emissions may be reduced when traffic density is high.

According to various embodiments, the acknowledgement may include data indicative of a cost rate of the additional treatment capacity. The control circuit may be further configured, before to control the airflow control device to increase treatment capacity, to receive a request confirmation. Thereby the demand vehicle may decide whether to accept the cost rate or not.

An aspect of the disclosure relates to a vehicle including the emission regulation system according to various embodiments.

An aspect of the disclosure relates to a fleet of two or more vehicles, the two or more vehicles operably communicable with each other, wherein a first vehicle is configured to requesting a second vehicle to provide air treatment, and wherein the second vehicle is configured to receive the request and control an air treatment system of the second vehicle to increase treatment capacity. Each of the two or more vehicles being a vehicle including the emission regulation system according to various embodiments. In some embodiments, each of the two or more vehicles may be capable to operate (and configured accordingly) as a supply vehicle and as a demand vehicle at different times.

As used herein, the two or more vehicles may be exemplified by a first vehicle and a second vehicle (but not limited thereto), the first vehicle (also referred to as a demand vehicle) may be configured to requesting the second vehicle (also referred to as a supply vehicle) to provide air treatment, and the second vehicle may be configured to receive the request and control an air treatment system of the second vehicle to increase treatment capacity.

As used herein and in accordance with various embodiments, the first vehicle and the second vehicle, or further vehicle(s) of the two or more vehicles are a fleet by the fact that they can operate together for air treatment - not necessarily because they are the same type or belong to same company. For example, other vehicles may be part of local traffic but not part of the fleet.

According to various embodiments, the fleet may include three or more vehicles, wherein a first vehicle is configured to request a plurality of vehicles, including at least a second vehicle, to provide air treatment, and wherein each vehicle of the plurality of vehicles is capable of receiving the request and control a respective air treatment system to increase treatment capacity.

According to various embodiments, treatment includes filtration and treating includes filtering.

As used herein and in accordance with various embodiments, additional treatment (e.g., as in additional treatment capacity) may mean remote treatment, as in remote to a demand vehicle.

According to various embodiments, the acknowledgement may indicate that a requested additional treatment capacity is available and/or the acknowledgment may include a data indicative of the additional treatment capacity available.

According to various embodiments, to increase treatment capacity may mean to increase treatment capacity by the additional treatment capacity. If the additional treatment capacity is being fully utilized by the request, then a total treatment may be stored in memory as a sum of the local treatment capacity and the additional treatment capacitiy(ies). In some embodiments, the emissions regulation system and/or the method in accordance with various embodiments, may be configured so that on acknowledgement the additional treatment capacity is fully utilized.

According to various embodiments, to receive a request for treatment may include to receive data indicative of a require capacity also named herein as treatment demand, or simply demand.

According to various embodiments, determine if there is additional treatment capacity available may include determine whether the additional treatment capacity is greater or equal to the demand. For example, the capacity could be a capacity per pre-determined time slot, e.g., provided by a "heartbeat" clock used by the control circuit, which could also be known, pre-determined, and/or transmitted to the demand vehicle. Another timing could be used, e.g., a time frame for treatment could be determined during by a communication handshaking.

According to various embodiments, the acknowledgement may include data indicative of a cost rate of the additional treatment capacity. The control circuit may be further configured to, before to control the air treatment system to increase treatment capacity, receive a request confirmation. Optionally, the request confirmation may include a microtransaction (such as a micropayment) or micropayment indication data. A micropayment may correlate, e.g., with energy expenditure for air treatment, and/or cost associated with pollution. According to various embodiments, treatment includes filtration and treating includes filtering.

In some embodiments, the demand vehicle and the supply vehicle may communicate one or more movement data, e.g., routing or velocity vectors, which may serve for determining a distance or an overlap of the second vehicle within a desired region of the first vehicle, such as a radius of a circle centered on the first vehicle, or a region in which the first vehicle has passed or will pass within a pre-determine time. For example movement data of the demand vehicle may be transmitted to the supply vehicle for determination of distance at the supply vehicle, movement data of the supply vehicle may be transmitted to the demand vehicle for determination of distance at the demand vehicle, and/or movement data of the supply vehicle and the demand vehicle may be sent to a processor exterior to both vehicles (e.g., a cloud our another vehicle) for determination of distance.

According to various embodiments, the vehicle may include the air treatment system. As used herein and in accordance with various embodiments, the term environment air may refer to air which is exterior to a vehicle's passenger cabin, example, ambient air also named as air surrounding the vehicle and may pass the vehicle during air treatment by the air treatment system. As used herein and in accordance with various embodiments, controlling the air treatment system includes the meaning of controlling an airflow control device.

The vehicle may be a motor-powered vehicle, for example having 2, 3, 4, or more wheels. Examples of the vehicle are passenger car, truck, buss, lorry, or a rail vehicle, for example a locomotive. The vehicle may include an air inlet opening upstream from the air treatment system (e.g. in a front region), for allowing air ingress and an air outlet, downstream from the air treatment system, for allowing air egress. The air inlet opening behind which the ambient air cleaning device is present may in particular be a cooling air inlet opening and may for example be covered by a radiator grille. For example, this may be at the same level as the front headlights with respect to the vertical axis of the vehicle, or may be located below or above them. The cross-sectional area of the air intake opening may be as large as possible so that the largest possible volume of air can be supplied. In some embodiments, the vehicle may be an electric vehicle or a hybrid (internal combustion engine and electrical) vehicle. In some embodiments, the vehicle may be an internal combustion engine (ICE) vehicle (*i*.*e*., non-hybrid). For example, such battery of an ICE vehicle may have a relatively large capacity and may operate the fan for a long time (e.g., 1h or more) without significant drain even if it is not being charge by an alternator. In some embodiments, the vehicle comprises an internal combustion engine and a cooling fluid temperature (from the hot side) may be used as representation of the engine temperature. In some embodiments, the vehicle comprises a fuel cell and a cooling fluid temperature (from the hot side) may be used as representation of the fuel cell temperature. In some embodiments, the vehicle comprises a battery and a thermal exchange system (comprising a coolant fluid) may be envisaged for control the temperature of the battery.

According to various embodiments, the blower may be a fan. The fan may be an electrical fan. In accordance with various embodiments, the fan may operate within a speed range of fan influence (and not operate out of said range), which may be a speed range in which operation of the fan is able to alter the airflow (e.g., the volumetric airflow in m³/s or the mass airflow in kg/s). In other words, out of the speed range of fan influence (within the speed range of non-fan influence) the airflow is substantially determined by the speed of the vehicle and is not alterable by the operation of the fan. Thus, not operating the fan out of the speed range of fan influence saves energy. Speed range of fan influence and the speed range of non-fan influence may be determined by measuring the airstream speed for different vehicle speed with the fan turned at this maximum nominal operation speed. Such measurement may be performed when there is no wind (i.e., external wind that would influence the measurements) and at a known temperature, e.g., T=30 °C, without any adverse weather event. With these measurements, a threshold of fan influence may be determined which may be specific for the vehicle type and/or air treatment system type. According to various embodiments, the speed range of fan influence may be from 0 km/h until the threshold of fan influence, and speed range of non-fan influence may be from speeds above the threshold of fan influence. The measurements may be performed for a specific car type and a specific fan type. The results of the measurements may be stored in a vehicle's memory (also named herein as computer memory of the vehicle) for later access, for example, the measurements may be stored in processed form as the pre-determined threshold of fan influence, the speed range of fan influence, or the speed range of non-fan influence. The pre-determined threshold of fan influence may be a single value, optionally including a hysteresis. Alternatively, the pre-determined threshold offan influence may be different values, which depend on the direction of change of the vehicle speed (accelerating or decelerating) and/or may be offset by a hysteresis. The hysteresis may also be stored in the vehicle's memory for later access.

According to various embodiments, the control circuit may be an or part of an ECU, however the disclosure is not limited thereto. Alternatively, the control circuit may be a separate circuit which is operably connectable with the ECU. In another alternative, the control circuit may comprise a separate circuit and an ECU, the separate circuit operably connectable with the ECU. Similarly, the memory may be in one or distributed in more than of abovementioned devices. Operably connectable may include the meaning of connectable via a data communication bus such as CAN bus.

According to various embodiments, the control circuit may obtain weather data, air quality, and/or air temperature by receiving the data from sensors integrated in (e.g., fixed to) the vehicle, for example upstream of an air treatment means, such as a filter. The sensor or sensors may be configured to measure one or both of: air temperature, air quality data, air relative humidity. A rain sensor may also provide may provide rain information.

According to various embodiments, air quality data may include one or more of PM10 concentration, PM2.5 concentration, PM1 concentration, relative humidity, VOC concentration, NOx concentration. In various embodiments, air quality data may include at least one particulate matter concentration is measured.

Alternatively or in addition to obtaining data from the sensors of the vehicle, said data (or part thereof) may be obtained from a weather database that is external to the vehicle (e.g., via wireless communication), for example from a cloud. Such weather database may be a weather database, e.g., as it is provided by weather service providers. The wireless communication may be provided without limitation, by the cellular infrastructure (3G, 4G, 5G, 6G and above), and/or WIFI. The weather database may provide information such as data representing adverse weather event, and/or air quality data.

Adverse weather event as used herein and in accordance with various embodiments may mean at least one of: snow, rain, sand storm, volcanic ash fall.

According to various embodiments, the air treatment system (and the emission regulation system) may be or include a filtration system comprising a filter as a treatment means. The filter may be a particle filter, for example, a PM10 filter, a PM2.5 filter, or PM1 filter. The filter may be a fine dust filter.

According to various embodiments, the filter has at least one filter element which may include at least one filter medium which may be folded into at least one filter bellows. The filter may include a plurality of fold stabilizing means which support the filter bellows and are present at a lateral distance of e.g., not more than 150 mm from one another, and for example at least 15 mm from one another, for example 70 mm. It may be provided that the filter medium has an intrinsic bending stiffness of at least 1 Nm², for example, at least 2 Nm². This refers to an intrinsic bending stiffness of the filter medium, i.e. in an unprocessed/unfolded state. The filter may comprise pleat stabilizing means. The filtration system may comprise one water separating device.

According to various embodiments, the depth of the filter element in the longitudinal direction of the vehicle may be less than 150 mm, for example less than 110 mm. The depth is preferably not less than 15 mm, since otherwise the usable filter area would be very low. In one embodiment of the application, the dimensions of an inflow surface of the ambient air purification device may be, for example, 45 cm (height) x 65 cm (width) for a typical mid-size passenger car. Depending on the size of the vehicle, however, significant deviations from this are possible, so that a range of dimensions from 20 cm in width to 120 cm in width and 15 cm in height to 100 cm in height are possible in principle.

According to various embodiments, the filter medium of the filter element of the ambient air purification device may be a single-layer or multi-layer filter medium, which may be water-resistant. It may be a multi-layer medium comprising at least one drainage layer and/or one pre-separator layer. Alternatively or additionally, the filter medium may comprise or consist of glass fibres and/or plastic fibres, in particular polyester and/or polyethylene. Finally, it may also be provided that the filter medium has a porosity gradient in a thickness direction, preferably in such a way that a pore size decreases in the direction of airflow.

According to various embodiments, depending on the design of the filter element (volume flow pressure loss characteristic), it can be achieved in conjunction with the fan that the fine dust emissions of the vehicle are completely compensated by the ambient air cleaning device, so that it is a zero-emission vehicle in terms of dust, e.g., in terms of PM10 or PM2.5. For a typical medium-class passenger car, the total particulate matter emission is about 25 mg/km.

According to various embodiments, the filter may include a filter frame, for example, at least partially circumferential frame in which the filter element (e.g., filter bellows) is accommodated. In an example, it may be provided that the frame has an L-shaped cross-sectional form, e.g., wherein one leg of the L-shaped cross-section of the frame engages behind the filter bellows of the filter element, and thus supports it counter to the effect of dynamic pressure. The filter may comprise two or more filter elements, and the filter elements may be arranged in (e.g., fixed to) a single filter frame, or alternatively, each filter element may be arranged in a separate frame element of a filter frame.

According to various embodiments, the filter element may in particular comprise or be a plastic-molded filter element, wherein the at least partially circumferential frame may be connected to the filter medium by a material-to-material bond. However, the invention is not limited to a material connection; as an alternative to the material connection of the filter medium to the frame, it may also be provided that the filter element is merely inserted into the frame, so that it is supported in a form-fitting manner on the rear leg of the L-profile.

As used herein and in accordance with various embodiments, an receptacle may also be referred to as holder.

According to various embodiments, the filter may be arranged (and arrangeable) into the receptacle. The filter may be replaceable. The receptacle may be fixed to the vehicle and may corresponds to the frame of the filter, in which the filter is held, optionally by detachable fastening means, e.g., a clip connection. The receptacle may further be configured to function as a mounting shaft, into which the at least one filter element may be linearly inserted. This makes it easy to replace the filter element, for example from the upper side of a lock carrier of a front hood or from an underbody side which is easily accessible, for example, during servicing on a lifting platform.

In some embodiments, it may further be provided that the filter is arranged with respect to a heat exchanger in such a way that it covers no more than 75% of an incident flow surface of the heat exchanger, so that sufficient residual heat dissipation is possible even when the filter element is loaded. In order to achieve this, the filter element can be arranged offset from the heat exchanger about the vertical and/or transverse direction of the vehicle. The non-covered portion of the heat radiator may form a bypass which may be openable and closeable. In other embodiments, the bypass may be an openable/closeable air passage which is independent from the heat exchanger surface, and the filter and the heat exchanger may be apart from each other at a distance sufficiently large to allow flow of air through the heat exchanger when the bypass is open, and even when the filter is loaded.

As used herein and in accordance with various embodiments, a required capacity may also be referred to as a demand, and vice-versa. A demand may be determined from the vehicle emissions, e.g., the current vehicle emissions which may be measured or calculated based on one or more of: engine, fuel parameters, filter status, catalysator status as known in the art.

As used herein and in accordance with various embodiments, a capacity may be determined based on a filter status and filter parameters. For example, filter status could be determined based on the history of the filter usage and/or calibration data. Alternatively or in addition, a capacity could be determined via sensors, example pressure differential measurements across a filter medium, and based on a calibration curve, the filtration capacity can be determined. Other methods for determining remaining filter capacity are known to the skilled person in the art. While several embodiments are explained in connection with vehicles, the embodiment detail and explain the air treatment system suitable for use in a vehicle, e.g., to be installed in and/or be part of a vehicle.

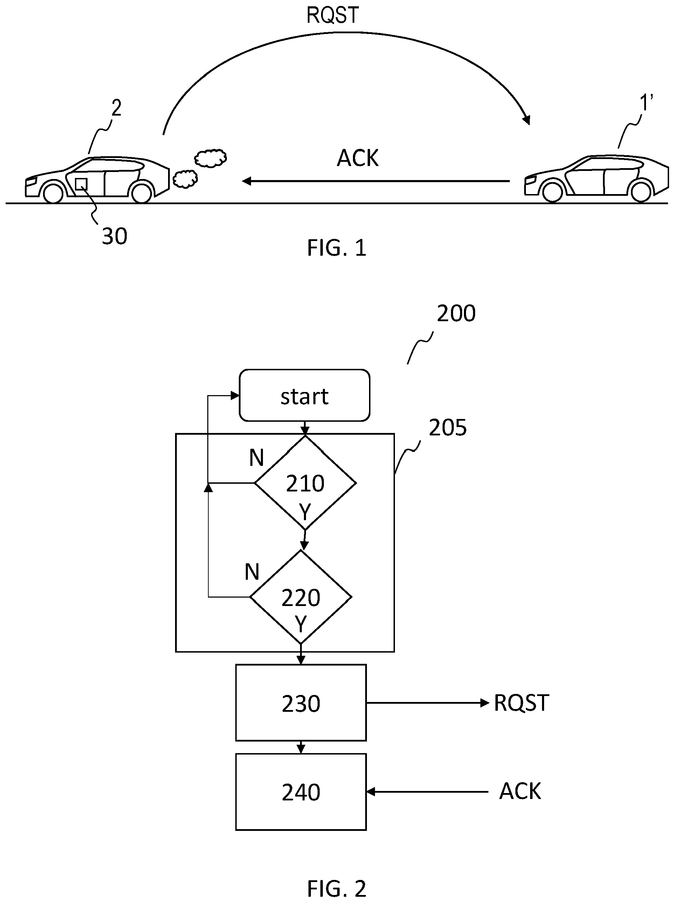

FIG.1 illustrates how two vehicles on a road may communicate with each other. In FIG. 1, a demand vehicle 2 has, by way of example, net emissions of pollutants greater than zero and sends a request RQST (e.g., via a communication interface 30) to a supply vehicle 1', the request being for air treatment. Vehicle 1' can receive the request, determine whether its own air treatment system has capacity available and confirm the request RQST by sending an acknowledgment back to demand vehicle 2.

In some embodiments, each of the supply vehicle 1' and the demand vehicle 2 comprise an emission regulation system in accordance with various embodiments, for example, each of the vehicles may send request for air treatment to another vehicle and each of the vehicles may also receive requests for air treatment from other vehicles. This may be particularly advantageous for ICE-electric hybrid vehicles, when there is enough battery, the vehicle may operate electrically and provide air treatment to other vehicles, when switching to ICE mode (e.g., due to low battery load) and a reduction of net emissions is envisaged, then the vehicle may request air treatment from other vehicles.

In some embodiments, the supply 2 vehicle may comprise a emission regulation system configured to work as a supply vehicle but not as a demand vehicle, for example it may receive requests for air treatment but may not request treatment from another vehicle. In some embodiments, the demand vehicle 2 may comprise a emission regulation system configured to work as a demand vehicle but not as a supply vehicle, for example, it may request air treatment from another vehicle but may not receive requests for air treatment.

According to various embodiments, a method 200 of treating environmental air is envisaged. Such a method will be explained in connection with FIG. 2 which for illustration purposes. The method 200 of treating environmental air may include determining 205 that there may be an air treatment demand at a demand vehicle 2. The determining step 205 may comprise determining 210 that there is a local treatment requirement of the demand vehicle 2 which is unsatisfied.

The local treatment requirement may be for example, a certain emission limit may be required but may be not met by the demand vehicle. A data record indicative of unsatisfied treatment requirement is marked as positive - for example a user, car manufacturer, or emission regulation agency may set a limit for emissions.

The method 200 of treating environmental air may include sending 230, by the demand vehicle 2, a request RQST for air treatment, e.g., by a communication interface 30, to a supply vehicle 1'. The method 200 of treating environmental air may include receiving 240, by the demand vehicle 2 (e.g., by the communication interface 30), an acknowledgement ACK from the supply vehicle 1'.

According to various embodiments, the determining 205 that there is an air treatment demand may further include determining 220 that a traffic density at a demand vehicle's surroundings is above a pre-determined density.

While determinations 210 and 220 are shown in a sequence, these may also be implemented to perform in parallel and/or their results connected by logical AND for comparison, or other suitable logic.

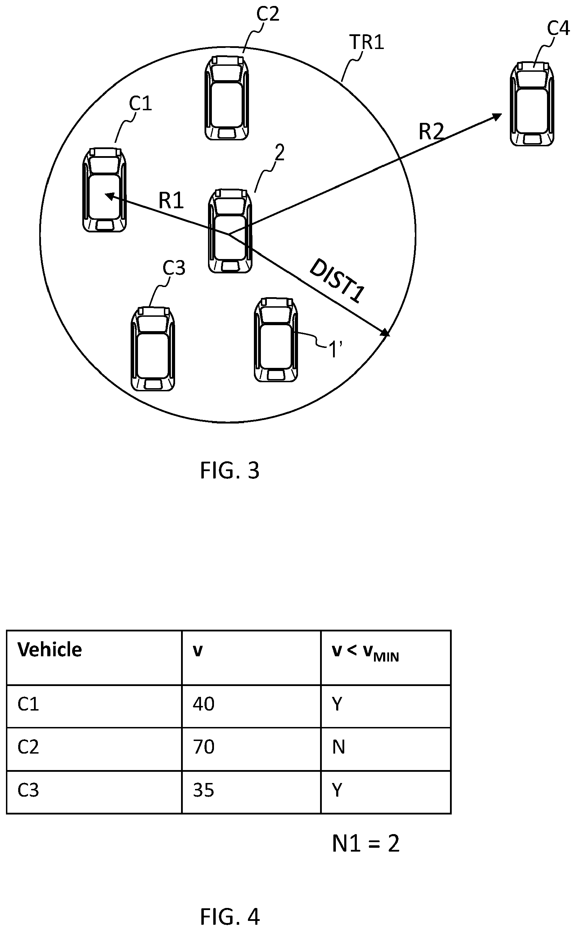

There are several embodiments for determining 220 a traffic density within a pre-determined distance from a demand vehicle 2 which can be implemented individually or as a combination, exemplary embodiments will be explained in connection with FIGS. 3 to 7.

FIG. 3 illustrates a schematic comprising a plurality of vehicles, wherein a vehicle 2 is configured as a demand vehicle and a vehicle 1' is configured as a supply vehicle, furthermore vehicles C1, C2, and C3 are within a pre-determined distance DIST1, which in this non-limiting example, is shown as a radius of a circle TR1, centered on demand vehicle 2, for illustration purposes. Also a vehicle C4 is shown, which is at a distance R2 being greater than the pre-determined distance DIST1. In this scenario, the number of vehicles within the pre-determined distance may be calculated by ignoring C4.

According to various embodiments, determining 220 a traffic density within a pre-determined distance from a demand vehicle 2 may be, or may be based on, a number of vehicles C1, C2, C3 within the pre-determined distance DIST1. For example, it may be based on summing the number of vehicles except the demand vehicle, summing the number of vehicles except the supply vehicle, or summing the number of all vehicles including the demand vehicle and the supply vehicle. The sum obtained from the summation may be compared to a pre-determined value, for example, a number selected from 20 or below, such as 10 or below, and preferably larger than 2. Or in another example, a density of vehicles per unit area or length of a road, such as, selected from the range of 50 vehicles / per km (or km²) or less, or 20 vehicles / per km (or km²) or less, preferably more than 5. A linear length of a road may be used, e.g., in highways. A unit area may be used, e.g., in city traffic. According to various embodiments, a pre-determined distance may be a circle centered (or otherwise located in relation to) a point of reference, e.g., on the demand vehicle, with a radius. The radius may be pre-determined, for example, selected from a range of 2 km to 0 m, or 2 km to 2 m, for example, 2 km, 1 km, 500 m, 100 m, or 50 m. According to some embodiments, a pre-determined distance may consider only vehicles on a same road, or only vehicles in a same lane.

According to various embodiments, determining 220 a traffic density within a pre-determined distance DIST1 from a demand vehicle 2 may further include determining 222 that the vehicle speed and/or the speeds of the surrounding vehicles C1, C3 is under a pre-determined minimum speed v_{MIN}. This means that the determination 220 of a high traffic density will only be positive if it is determined 222 that the vehicle speed and/or the speeds of the surrounding vehicles C1, C3 are under a pre-determined minimum speed v_{MIN}, for example, by disregarding vehicles (C2) that do not satisfy this condition. For example, as illustrated in the table of FIG. 4, v_{MIN} is pre-determined at 50, vehicle C1 has a speed of 40 which is lower than the v_{MIN} (v < v_{MIN} = Y), vehicle C2 has a speed of 70 which is greater than the v_{MIN} (v < v_{MIN} = N), and vehicle C3 has a speed of 35 which is lower than the v_{MIN} (v< v_{MIN} = Y). Thus, the number of vehicles considered for the determination of traffic density may disregard faster vehicles, and in the example, would ignore vehicle C2 be N1 = 2 in the illustrated example. In non-limiting examples, the unit of speed may be km/h or m/s. This may be helpful to detect an agglomeration of vehicles, for example, vehicles in a traffic jam or otherwise slow traffic aligning at one side of the road to exit the road, while at the same time, faster vehicles may be bypassing the slow vehicles at another lane that goes straight and does not exit the road.

According to some embodiments, the surrounding vehicles may include the supply vehicle. In other words, one or more of the surrounding vehicles may also be a supply vehicle. Thereby an accurate determination of the traffic density may be performed since the supply vehicle is included in the determination. Alternatively, the supply vehicle may be considered as being separate from the surrounding vehicles, which may be a good approximation for high traffic density, e.g., if the overall number of surrounding vehicles is large.

According to various embodiments, a potential supply vehicle may indicate that it is available or not available for air treatment, for example by communicating an availability data to the demand vehicle, e.g., upon request of the demand vehicle. For example, a parked and charging vehicle may be available for air treatment. In another example, a parked a non-charging vehicle may indicate that it is not available for air treatment. Further, in another example, an air filter may be near being fully loaded (e.g., above a pre-determined loading threshold) and the vehicle may thus indicate that it is not available for air treatment. Alternatively or in addition, air treatment may be rejected by ignoring a request RQST or by refusing a request RQST.

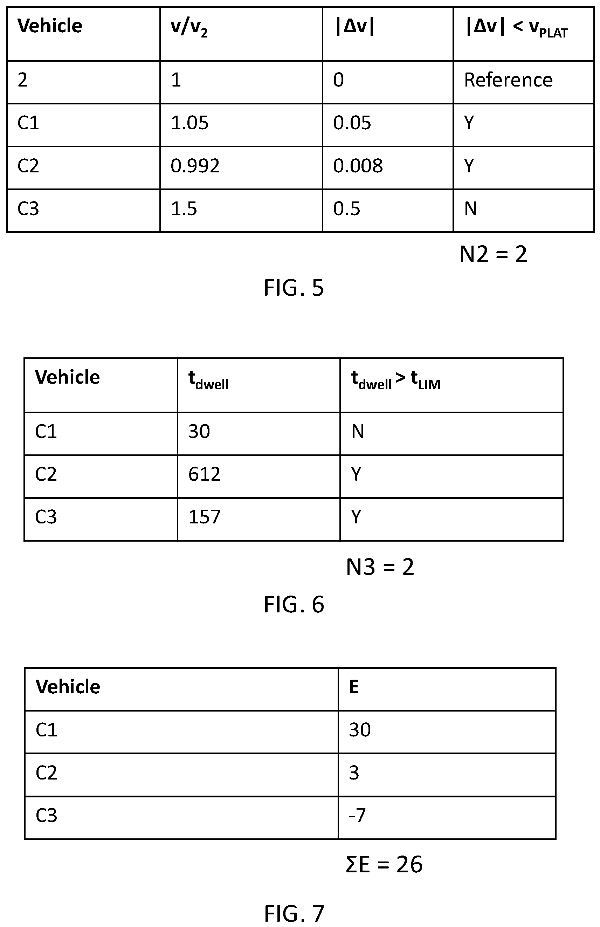

According to various embodiments, determining 220 a traffic density within a pre-determined distance from a demand vehicle 2 may include determining 224 that at least a pre-determined number N2 of vehicles C1, C2 within a pre-determined distance DIST1 is platooning with the demand vehicle 2. Platooning detection may be performed by comparing the speed of the surrounding vehicles with the speed of the demand vehicle, and a positive determination of platooning may be given in the case that at least one of the surrounding vehicles has a relative speed within a pre-determined range. For example, as illustrated in the table of FIG. 5, demand vehicle 2 is shown as a reference having a normalized speed (v₂/v₂) of 1, and an identical relative speed |Δv| to itself of 0. Vehicle C1 has a normalized speed (v/v₂) of 1.05, and a relative speed to demand vehicle 2 |Δv| of 0.05. Comparing the relative speed (|Δv|) to the pre-determined range (V_{PLAT}) may be used to determine whether the surrounding vehicle and the demand vehicle are platooning, which in the example, the pre-determined range V_{PLAT} is 0.1, thus resulting in a positive determination of platooning (|Δv| < V_{PLAT}) = Y. Similar is the situation for vehicle C2, which is a bit slower than the demand vehicle but still within the pre-determined range. Conversely, C3 has a normalize speed of 1.5, and is thus 50% faster than the demand vehicle (|Δv|=0.5), thus resulting in a negative determination of platooning (|Δv| < V_{PLAT}) = N for that vehicle, which is then disregarded from the sum of vehicles. In FIG. 5, C1 and C2 form, together with demand vehicle 2, a platoon of vehicles. These calculations and comparisons may be performed in other alternative and/or similar manners. For example, speeds may be used directly, and a normalization may not be required. In non-limiting examples, the unit of speed may be km/h or m/s.

According to various embodiments, determining 220 a traffic density within a pre-determined distance from a demand vehicle 2 may include determining 226 that at least a pre-determined number N3 of vehicles C2, C3 within a pre-determined distance DIST1 have a dwell/residence time greater t_{dwell} than a pre-determined threshold t_{LIM}. For example, as illustrated in the table of FIG. 6, vehicle C1 remains within the pre-determined distance from the demand vehicle 2 for a time of t_{dwell} = 30, vehicle C2 for a time of t_{dwell} = 612 and vehicle C3 for a time of t_{dwell} = 157. For an exemplary pre-determined threshold t_{LIM} of 120, C1 dwell time would be too short and only C2 and C3 would be considered, thus the number of vehicles surrounding the demand vehicle would be N3 = 2. In one non-limiting example, the time unit is seconds. In examples, a distance may be determined by any known automated means, such as a radar, lidar, or RSSI signal. For example, using a Received Signal Strength Indicator (RSSI) of a known transmitter, such as bluetooth, e.g., bluetooth 5.1 and above. Triangulation among 3 or more receivers with known position (e.g., GPS) may be be used to determine more precise positions if needed. Alternatively or in addition, phase measurements by multiple antennas (2 or more, or an array) may be used to obtaining the direction, which combined with RSSI may give a position of the emitter.

According to some embodiments, two or more of determinations 222, 224, and 226 may be combined. For example, a first vehicle C1 may have a speed of 40 which is lower than the v_{MIN}, a second vehicle C2 and a third vehicle C3 may be platooning with the demand vehicle, and third vehicle C3 may have a dwell time greater t_{dwell} than a pre-determined threshold t_{LIM}, a fourth vehicle C4 is passing at high speed, thus not satisfying any of the determinations 222, 224, and 226, thus the vehicles within the pre-determined distance, when all 3 determinations 222, 224, and 226 are combined, are demand vehicle 2, first to third vehicles C1, C2, C3, and thus the sum is 4 (or 3 if the method is implemented such that the demand vehicle 2 is not counted). In such example, the traffic density may be 4, or alternatively 4 / unit area, or 4 / length.

According to various embodiments, determining 220 a traffic density within a pre-determined distance from a demand vehicle 2 may further include receiving emission data from the vehicles C1, C2, C3 within a pre-determined distance DIST1; and may further include determining 228 that a sum of emission rates from the vehicles C1, C2, C3 within the pre-determined distance is above a pre-determined emissions limit E_{LIM}. The sum or emission rates may include the meaning of a sum of net emission rates. In the example of FIG. 7, vehicle C1 has a net emission rate of 30, vehicle C2 has a net emission rate of 3, and vehicle C3 has a net emission rate of -7, providing a sum net emission rate of ΣE = 26, if compared to an exemplary pre-determined emissions limit E_{LIM} of 22; the determination 228 that a sum of emission rates from the vehicles C1, C2, C3 is above a pre-determined emissions limit E_{LIM} is positive. In some non-limiting examples, the unit of the emission rates of pollutants may be gram / km or gram / h.

According to various embodiments, determining 220 that a traffic density at a demand vehicle surroundings is above a pre-determined density may be performed on the demand vehicle 2 or on the supply vehicle 1'.

According to various embodiments, the supply vehicle may be considered as one of the surrounding vehicles and thus included in the determination of traffic density.

According to various embodiments, determining 220 that a traffic density at a demand vehicle surroundings is above a pre-determined density may be performed on a remote processor, such as, of a cloud 6. The cloud may be configured to receive traffic data over time and the processor to determine that there is a high number of vehicle passes of vehicles at a position of the demand vehicle 2, for example during a pre-determined time window.

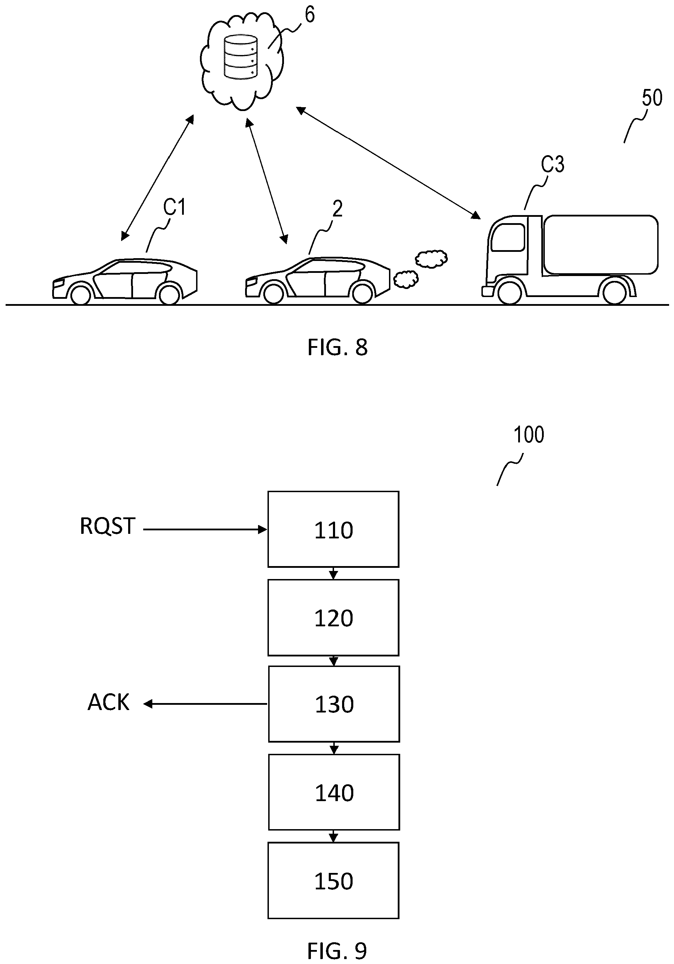

FIG. 8 illustrates an embodiment of the invention in which 3 vehicles C1, 2, and C3 have essentially identical velocity vectors and thus form a platoon. C1 and C3 are determined to be within the pre-determined distance of vehicle 2. Each of the vehicles C1, 2, C3 may be connected to a cloud 6, or may communicate directly with each other or through another wireless networking infrastructure. It is, for example at the cloud 6, determined 210 that there is a local treatment requirement of the vehicle 2 which is unsatisfied, for example vehicle 2 has net emissions above a pre-determined limit, and therefore it is determined 205 that there is an air treatment demand at a vehicle 2. Vehicle 2 is thus the demand vehicle. Vehicles C1 and C3 have air treatment capabilities, for example, each has a particle filter for filtering ambient air. Demand vehicle 2 may send a request to one of both of vehicles C1 and C3 to provide additional air treatment which may be used to compensate emissions of the demand vehicle 2.

According to some embodiments, determining 210 that there is a local treatment requirement of the demand vehicle 2 which is unsatisfied may be performed on the demand vehicle 2, for example, by comparing a nominal emission rate of the demand vehicle 2 with a pre-determined required emission limit.

FIG. 9 illustrates a method 100 comprising steps that may be performed on the supply vehicle 1'. The method 100 may be part of method 200.

Method 100 may include, on the supply vehicle 1', receiving 110 a request for treatment including receiving data indicative of a demand DEM1. Method 100 may include, on the supply vehicle 1', determining 120 that the air treatment system 10 has additional treatment capacity available including determining that the additional treatment capacity CAP1 is greater or equal to the demand DEM1. Method 100 may include, on the supply vehicle 1', controlling 140 the air treatment system 10 (e.g., an air flow control device 11) to increase treatment capacity may be by the additional treatment capacity CAP1.

According to various embodiments, the method 100 may further include recording 150, on a local memory of the supply vehicle 1' and/or on a local memory of the demand vehicle 2, data indicative of the additional treatment capacity utilized. In accordance with various embodiments, the acknowledgement ACK sent to the demand vehicle 2 may include the data indicative of an additional treatment capacity CAP1.

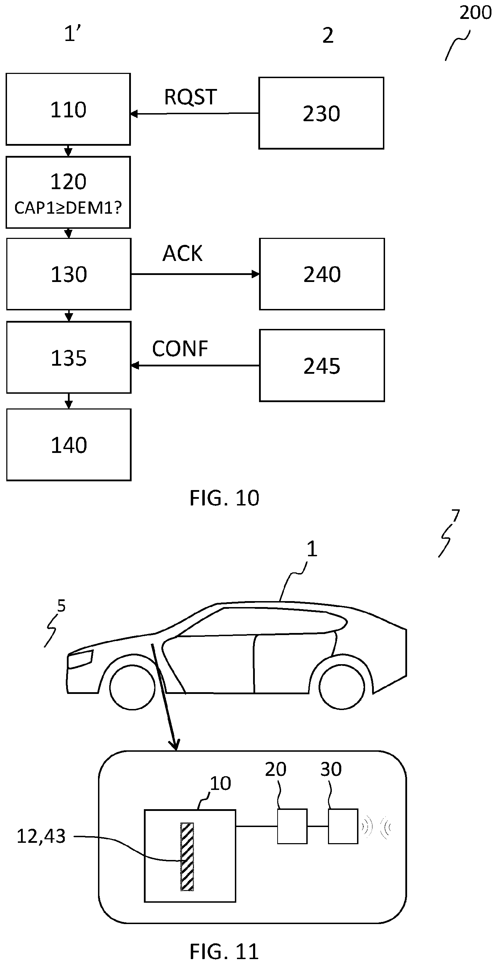

While some of the previous embodiments may focus on the illustration either of demand or supply vehicle (without being limited thereto), FIG. 10 is used to illustrated how the method of treating environmental air may be run concomitantly for the demand vehicle 2 and the supply vehicle 1'. FIG. 10 shows a method 200 of treating environmental air. According to various embodiments, the method 200 may further include sending 230, by the demand vehicle 2, a request RQST' for air treatment by a communication interface 30 to a supply vehicle 1'. The method 200 may include receiving 110, by a communication interface 30 of a supply vehicle 1', a request RQST for treatment from a demand vehicle 2. The method 200 may further include determining 120, by a control circuit 20 of the supply vehicle 1', that an air treatment system 10 has an additional treatment capacity available. The method 200 may further include sending 130, by the communication interface 30 of the supply vehicle 1', an acknowledgement ACK from the supply vehicle 1'. The method 200 may further include receiving 240, by the demand vehicle 2, an acknowledgement ACK from the supply vehicle 1'. In some embodiments, the method may include, sending 245, by the demand vehicle 2, a confirmation CONF and receiving 135, by the supply vehicle 1', he confirmation CONF; by such further step, it is possible, e.g., to send with the ACK an available capacity, and the supply vehicle 1' has the option to confirm that it will use the available capacity. The method 200 may further include by the control circuit 20 of the supply vehicle 1', controlling 140 the air treatment system 10 (e.g. the airflow control device 11) of the supply vehicle 1' to increase treatment capacity. Controlling 140 the air treatment system 10 may include operating the airflow control device 11.

In some embodiments, the demand vehicle 2 and the supply vehicle 1' may communicate one or more movement data, e.g., routing or velocity vectors, which may serve for determining a distance or an overlap of the second vehicle within a desired region of the first vehicle, such as a radius of a circle centered on the first vehicle, or a region in which the first vehicle has passed or will pass within a pre-determine time. For example movement data of the demand vehicle 2 may be transmitted to the supply vehicle 1' for determination of distance at the supply vehicle 1', movement data of the supply vehicle 1' may be transmitted to the demand vehicle 2 for determination of distance at the demand vehicle 2, and/or movement data of the supply vehicle 1' and the demand vehicle 2 may be sent to a processor exterior to both vehicles (e.g., a cloud our another vehicle) for determination of distance.

According to various embodiments, the method 200 may further include, by the demand vehicle 2, determining that there is an air treatment demand by determining that there is a local treatment requirement unsatisfied by the air treatment system, before sending 210 the request for air treatment. In this context, the term "local" means from the demand vehicle 2.

According to various embodiments, the method 200 may further include recording 250, on a local memory of the supply vehicle 1' and/or on a local memory of the demand vehicle 2, data indicative of the additional treatment capacity utilized. According to various embodiments, the acknowledgement ACK may include data indicative of an additional treatment capacity CAP1. According to various embodiments, controlling 140 the air treatment system 10 (e.g. the airflow control device 11) to increase treatment capacity may include the meaning to increase the treatment capacity by the additional treatment capacity CAP1. According to various embodiments, receiving 110 a request for treatment may include receiving data indicative of a demand DEM1 (in other words, a required capacity). Determining 120 that the air treatment system 10 has additional treatment capacity available may include determining that the additional treatment capacity CAP1 is greater or equal to the demand DEM1.

According to various embodiments, the method 200 may further include before controlling 140 the air treatment system 10 (e.g. the airflow control device 11) to increase treatment capacity, receiving CONF a request confirmation, optionally including a microtransaction (such as a micropayment) or micropayment indication data. The acknowledgement ACK may include data indicative of a cost rate of the additional treatment capacity.

FIG. 10 illustrates an exemplary interaction between the method steps on the supply vehicle 1' and on the demand vehicle 2. The illustration is simplified and not all steps may be shown in accordance with various embodiments. A supply vehicle may receive 110 a RQST for treatment capacity. For example, a demand vehicle of a fleet may determine 202 that there is a demand for air treatment, and send 230 a request RQST for treatment capacity to a supply vehicle. Said request may include a demand DEM1, e.g., mass of particles to be retained by a filter of the supply vehicle. The supply vehicle may determine 120 that it is able to carry out the air treatment for the demand, for example if a capacity CAP1 of the supply vehicle is greater or equal than the demand DEM1. The supply vehicle may, after the determination, send 130 an acknowledgement ACK (e.g., to the demand vehicle) and start performing 140 the air treatment. Alternatively, the supply vehicle may after the determination, send 130 an acknowledgement ACK (e.g., to the demand vehicle) and wait to receive 135 a confirmation CONF, and start performing 140 the air treatment only after receiving 135 the confirmation CONF. It is understood that the example is not limiting any variations thereto are possible, for example the supply vehicle could send its status data to the demand vehicle and the demand vehicle may carry out determination that the supply vehicle has enough capacity for the demand. Alternatively, some of the determinations may be performed exterior to any of the vehicles, e.g., in a cloud to which both vehicles communicate.

According to various embodiments, to receive 110 a request for treatment RQST may include to receive data indicative of a demand DEM1 (*i*.*e*., a required capacity). Determine 120 if the air treatment system 10 has additional treatment capacity available may include determine whether the additional treatment capacity CAP1 is greater or equal to the demand DEM1. For example, the capacity could be a capacity per pre-determined time slot, e.g., provided by a "heartbeat" clock used by the control circuit, which could also be known, pre-determined, and/or transmitted to the demand vehicle. Another timing could be used, e.g., a time frame for treatment could be determined during by a communication handshaking.

In an example, a supply vehicle may receive 110 a RQST for treatment capacity. For example, a demand vehicle of a fleet may determine 202 that there is a demand DEM1 for air treatment, and send 230 a request RQST for treatment capacity to a supply vehicle. The supply vehicle may determine 120 that there is a capacity CAP1 greater than zero, e.g., in the form of a mass of particles to be retained by a filter of the supply vehicle. The supply vehicle may, after the determination, send 130 an acknowledgement ACK (e.g., to the demand vehicle), which may include the capacity CAP1. The supply vehicle may receive a confirmation CONF, for example, the demand vehicle may compare the CAP1 with its demand and determine whether it can use CAP1 (e.g., it may be sufficient to cover the demand or a portion of the demand, CAP1≥DEM1?) and send the confirmation CONF to the supply vehicle. The supply vehicle may start performing 140 the air treatment after receiving the confirmation CONF. It is understood that the example is not limiting any variations thereto are possible, for example the supply vehicle could send its status data to the demand vehicle and the demand vehicle may carry out determination that the supply vehicle has enough capacity for the demand. Alternatively, some of the determinations may be performed exterior to any of the vehicles, e.g., in a cloud to which both vehicles communicate. In another variation, the supply vehicle may be configured carry out different method variations depending on the type or format of request received, for example, the supply vehicle may be configured to receive a request for air treatment RQST, in the case the request is without demand data the supply vehicle may send the available capacity, and in the case that the request includes demand data, the supply vehicle may perform the determination if capacity >= demand, and only send an acknowledgement ACK if the determination is positive or, optionally send a partial acknowledgement with the capacity < demand. This allows for flexibility, since the demand vehicle may have different reasons for requesting capacity, while a first require may need a limited capacity a second reason may require any available capacity. Thus, overall air treatment may be improved given that the method and the control circuit accept various types of requests.

According to some embodiments, the acknowledgement ACK, ACK' may include data indicative of a cost rate of the additional treatment capacity. According to various embodiments, the control circuit 20 may be further configured to, before to control 140 the air treatment system 10 (e.g. the airflow control device 11) to increase treatment capacity, receive 135 a request confirmation CONF. The confirmation may include a microtransaction (such as a micropayment) or micropayment indication data.

The method in accordance with various embodiments may include determining whether supply vehicles 1 and 3 are within a predetermined radius TR1 for air treatment, wherein the pre-determined radius TR1 is centered on the demand vehicle 2. The center of the pre-determined radius TR1 may be on a pre-determined position of the vehicle, for example, at the position of the antenna of or connected to the communication interface and used for the communication. A distance of a supply vehicle to the center of the circle with pre-determined radius TR1 may be determined from a pre-determined position (e.g. the center) of the demand vehicle to a pre-determined position of the supply vehicle, e.g., at the position of the antenna of or connected to the communication interface and used for the communication, of the supply vehicle. if supply vehicle 1' is determined to be within the pre-determined radius TR1 and that another vehicle 3 is not within the pre-determined radius TR1, supply vehicle 1' may provide air treatment, while said another vehicle 3 may not provide air treatment, e.g., by not receiving a request RQST (e.g., by the demand vehicle not sending the RQST), by not receiving a confirmation CONF, by not sending an acknowledgement ACK, or a combination thereof.

Various embodiments relate to an emission regulation system 7, for a vehicle 1. Using FIG. 11 as reference for illustrating an emission regulation system 7, the system 7 may include a holder 12 for receiving a replaceable air filter 43 (e.g., a receptacle). The system 7 may include an airflow control device 11, for example, a duct, a bypass, a shutter, a blower, or a combination thereof. The system 7 may include a control circuit 20. The system 7 may include a communication interface 30 configured to wirelessly send and receive commands external to the vehicle 1 and operably coupled to the control circuit 20. The control circuit 20 may be configured to receive a request RQST for air treatment, which request RQST originate external to the vehicle 1, e.g., from a demand vehicle 2. The control circuit 20 may be configured to determine whether current emissions of the vehicle 2 are below a pre-determined limit and whether there are available capacity, for example, the filter may currently not be used, as the system is not operating, or it may be under utilized (e.g., a blower is operating below its limit). In addition it may be checked whether the air filter is fully loaded or may still be used.

According to various embodiments, the control circuit 20 may be configured to determine that the request is received, that it is determined that current emissions of the vehicle 2 are below the pre-determined limit, and that there is available capacity, and then: control the airflow control device 11 to utilize at least part of the available capacity. For example, turn on a blower, open a shutter, close a bypass, increase a blower speed, or a combination thereof. According to various embodiments, the control circuit 20 may be configured to via the communication interface 30, send 130 an acknowledgement ACK, if additional treatment capacity is available. The control circuit 20 may be further configured to control the airflow control device 11 to increase treatment capacity.

According to various embodiments the control circuit 20 may be further configured to determine 202 if there is treatment demand when a local treatment requirement is unsatisfied. According to various embodiments the control circuit 20 may be further configured to, if there may be a treatment demand, via the communication interface 30, send a request RQST for remote treatment capacity and receive an acknowledgment ACK; and optionally provide on a memory data indicative of the additional treatment capacity utilized.

According to various embodiments, the control circuit 20 may be further configured to: determine whether current emissions of the vehicle 1 exceeds a pre-determined limit, and if determined that the current emissions of the vehicle 1 exceeds a pre-determined limit, send a request RQST for air treatment by a communication interface 30 to a supply vehicle 1'. The control circuit 20 may be further configured to receive an acknowledgement ACK from the supply vehicle 1'.

According to some embodiments, the control circuit 20 may be further configured to determine whether a traffic density at surroundings of vehicle 1 is above a pre-determined density, and may be further configured to control the on-board air treatment system (e.g. the airflow control device) to utilize at least part of the available capacity only if the determination is positive. For example, although emission reduction does not mee the requirements, only operate the air treatment system when there is high traffic density. With this method, pollution peaks may be treated while extending the lifetime of the air treatment system (e.g., filter loading).

According to some embodiments, the control circuit 20 may be further configured to determine whether a traffic density at surroundings of vehicle 1 may be above a pre-determined density, and determine whether there is additional available capacity. The control circuit 20 may be further configured to, if the request is received, and if both determinations are positive, control the airflow control device 11 to utilize at least part of the additional available capacity. In this embodiment the air treatment system may be operating even when there are no pollution peaks, but may utilize additional capacity in case of high traffic density.

According to various embodiments, the acknowledgement ACK may include data indicative of a cost rate of the additional treatment capacity. The control circuit 20 may be further configured to, before to control the airflow control device 11 to increase treatment capacity, to receive a request confirmation CONF.

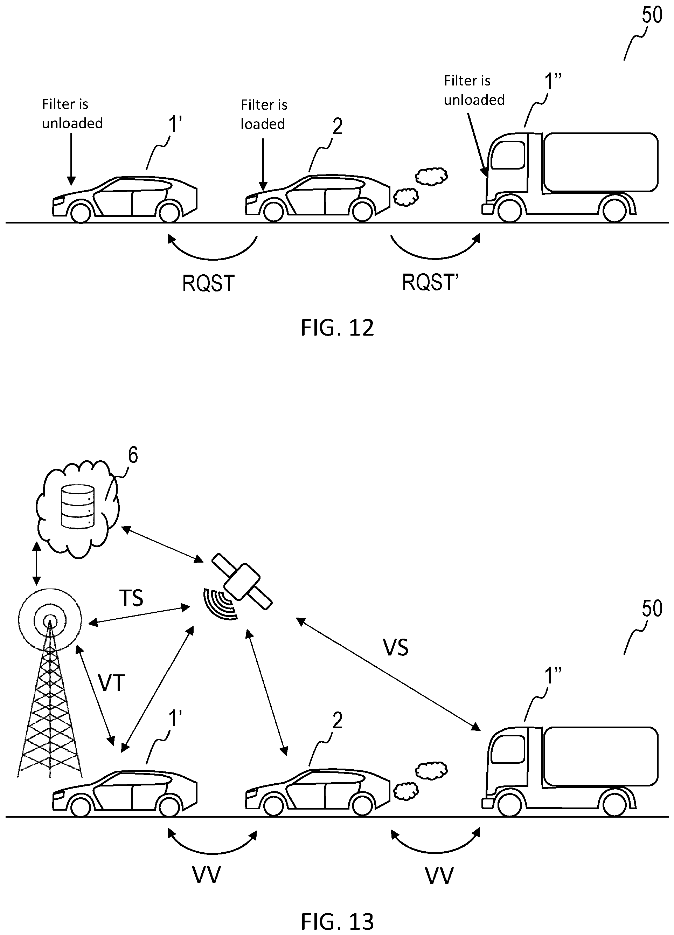

FIG. 12 Various embodiments concern a fleet 50 of two or more vehicles 2, 1', the two or more vehicles 2, 1' operably communicable with each other, wherein a first vehicle 2 may be configured to requesting a second vehicle 1' to provide air treatment, and wherein the second vehicle 1' may be configured to receive the request and control an air treatment system 10 (e.g. the airflow control device 11) of the second vehicle 1' to increase treatment capacity.

According to some embodiments, a control unit may determine that it is able to carry out the air treatment for the demand according to various parameters, for example, based on a filter efficiency, a level of filter loading, and an air quality data (e.g., including a particulate matter measurement for the position of the supply vehicle).

According to various embodiments, a vehicle may be configured as a demand vehicle configured to and capable of carrying out the method (e.g., 200) of requesting remote treatment, or may be configured to and capable of carrying out the method (e.g., 100) of receiving a request for treatment and carrying out the treatment, or may be configured to perform to and capable of carrying out both methods, thus functioning at a time as a demand vehicle and at another time as a supply vehicle, as needed.

According to various embodiments, the acknowledgement ACK, ACK' may include data indicative of the additional treatment capacity CAP1. According to various embodiments, to increase treatment capacity may mean to increase treatment capacity by the additional treatment capacity CAP1.

According to various embodiments, a control circuit may be configured to and capable of determining that there is a demand for air treatment. Such determination may be due to different factors, for example, a net emission category of the vehicle requires that its fine dust ambient air filter is working, however the fine dust ambient air filter may be almost fully loaded, and therefore the filter lifetime can be stretched by utilizing remote air treatment.

According to various embodiments, to receive 110 a request for treatment RQST may include to receive data indicative of a demand DEM1 (*i*.*e*., required capacity). Determine 120 if the air treatment system has additional treatment capacity available may include determine whether the additional treatment capacity CAP1 is greater or equal to the demand DEM1.

FIG. 13 shows a fleet of vehicles for illustration purposes. Various embodiments concern a fleet 50 of two or more vehicles 2, 1' in accordance with various embodiments. The two or more vehicles 2, 1' may be configured to operably communicable with each other. The first vehicle 2 (demand vehicle) may be configured to requesting a second vehicle 1' (supply vehicle) to provide air treatment, and the second vehicle 1' may be configured to receive the request and control an air treatment system 10 (e.g. the airflow control device 11) of the second vehicle 1' to increase treatment capacity in accordance with various embodiments.

According to various embodiments, the fleet 50 may include three or more vehicles 2, 1', 1", wherein a first vehicle 2 is configured to request a plurality of vehicles 1', 1", including at least a second vehicle 1', to provide air treatment, and wherein each vehicle of the plurality of vehicles 1', 1" is configured to receiving the request and control a respective air treatment system 10 (e.g. the airflow control device 11) to increase treatment capacity in accordance with various embodiments. Thus, vehicles 1' and 1" may compensate a net emission from the first vehicle 2. Other vehicles (e.g., not configured according to the present disclosure) may be part of local traffic but not part of the fleet.

FIG. 13 shows a fleet of vehicles in accordance with various embodiments, for illustration purposes. Various embodiments concern a fleet 50 of two or more vehicles 2, 1', 1" in accordance with various embodiments. The two or more vehicles 2, 1', 1" may be configured to operably communicable with each other. In some embodiments the two or more vehicles 2, 1', 1" may communicate with each other via vehicle-to-vehicle communication VV; for example directly (free of any transponder or transceiver, external to the vehicles). Alternatively or in addition, the two or more vehicles 2, 1', 1" may communicate with each other via infrastructure external to the vehicle, such as a satellite (vehicle to satellite communication VS), mobile phone network VT, a transponder, a transceiver, or a combination thereof, for example, the communication infrastructure further include access to a server, e.g. a cloud 6.

According to various embodiments, communication between two vehicles, either directly (vehicle-to-vehicle) or indirectly (e.g., via infrastructure) may be provided by one or more of may operate according to any one or more of the following radio communication technologies and/or standards including but not limited to: Global System for Mobile Communications (GSM) radio communication technology, General Packet Radio Service (GPRS) radio communication technology, Enhanced Data Rates for GSM Evolution (EDGE) radio communication technology, Third Generation Partnership Project (3GPP) radio communication technology, Universal Mobile Telecommunications System (UMTS), Freedom of Multimedia Access (FOMA), 3GPP Long Term Evolution (LTE), 3GPP Long Term Evolution Advanced (LTE Advanced), Code division multiple access 2000 (CDM2000), Cellular Digital Packet Data (CDPD), Mobitex, Third Generation (3G), Circuit Switched Data (CSD), High-Speed Circuit-Switched Data (HSCSD), Universal Mobile Telecommunications System (Third Generation) (UMTS (3G)), Wideband Code Division Multiple Access (Universal Mobile Telecommunications System) (W-CDMA (UMTS)), High Speed Packet Access (HSPA), High-Speed Downlink Packet Access (HSDPA), High-Speed Uplink Packet Access (HSUPA), High Speed Packet Access Plus (HSPA+), Universal Mobile Telecommunications System-Time-Division Duplex (UMTS-TDD), Time Division-Code Division Multiple Access (TD-CDMA), Time Division-Synchronous Code Division Multiple Access (TD-CDMA), 3rd Generation Partnership Project Release 8 (Pre-4th Generation) (3GPP Rel. 8 (Pre-4G)), 3GPP any of Releases 9 to 17 and subsequent releases (such as Rel. 18, Rel. 19, etc.), 3GPP 5G, 3GPP LTE Extra, LTE-Advanced Pro, LTE Licensed-Assisted Access (LAA), MuLTEfire, UMTS Terrestrial Radio Access (UTRA), Evolved UMTS Terrestrial Radio Access (E-UTRA), Long Term Evolution Advanced (4th Generation) (LTE Advanced (4G)), cdmaOne (2G), Code division multiple access 2000 (Third generation) (CDM2000 (3G)), Evolution-Data Optimized or Evolution-Data Only (EV-DO), Advanced Mobile Phone System (1st Generation) (AMPS (1G)), Total Access Communication System/Extended Total Access Communication System (TACS/ETACS), Digital AMPS (2nd Generation) (D-AMPS (2G)), Push-to-talk (PTT), Mobile Telephone System (MTS), Improved Mobile Telephone System (IMTS), Advanced Mobile Telephone System (AMTS), OLT (Norwegian for Public Land Mobile Telephony), MTD (Swedish abbreviation for Mobile telephony system D), Public Automated Land Mobile (Autotel/PALM), ARP (Finnish for car radio phone), NMT (Nordic Mobile Telephony), High capacity version of NTT (Nippon Telegraph and Telephone) (Hicap), Cellular Digital Packet Data (CDPD), Mobitex, DataTAC, Integrated Digital Enhanced Network (iDEN), Personal Digital Cellular (PDC), Circuit Switched Data (CSD), Personal Handy-phone System (PHS), Wideband Integrated Digital Enhanced Network (WiDEN), iBurst, Unlicensed Mobile Access (UMA), also referred to as 3GPP Generic Access Network, or GAN standard, Bluetooth(r), Bluetooth Low Energy (BLE), IEEE 802.15.4 based protocols (e.g., IPv6 over Low power Wireless Personal Area Networks (6LoWPAN), WirelessHART, MiWi, Thread, 802.11a) WiFi-direct, ANT/ANT+, ZigBee, Z-Wave, 3GPP device-to-device (D2D) or Proximity Services (ProSe), Low-Power Wide-Area-Network (LPWAN), Long Range Wide Area Network (LoRA) or LoRaWAN^{™} developed by Semtech and the LoRa Alliance, Sigfox, Wireless Gigabit Alliance (WiGig) standard, mmWave standards in general (wireless systems operating at 10-300 GHz and above such as WiGig, IEEE 802.11ad, IEEE 802.11 ay), technologies operating above 300 GHz and THz bands, (3GPP/LTE based or IEEE 802.11p and other) V2X communication technologies, 3GPP cellular V2X, DSRC (Dedicated Short Range Communications) communication systems such as Intelligent-Transport-Systems and others, the European ITS-G5 system (i.e. the European implementation of IEEE 802.11p based DSRC, including ITS-G5A, ITS-G5B, ITS-G5C). In addition to the radio communication technologies and/or standards listed above, any number of satellite uplink technologies may be used including, for example, radios compliant with standards issued by the ITU (International Telecommunication Union), or the ETSI (European Telecommunications Standards Institute), Starlink^{™} among others. The embodiments provided herein are thus understood as being applicable to various other communication technologies, both existing and not yet formulated.

According to various embodiments, the method may include determining whether the supply vehicles are within a pre-determined radius of the demand vehicle and only carry out air treatment of the supply vehicles that are within the pre-determined radius.

According to various embodiments, the method may include determining whether a supply vehicle's route passes through (e.g., overlaps) with a route of the demand vehicle even if at different times, e.g., different times of a day. Alternatively or in addition, the method may include determining whether a supply vehicle's passes at or close (within the pre-determined radius) a previous position of a demand vehicle, for example, by matching positions of supply vehicle and demand vehicle.

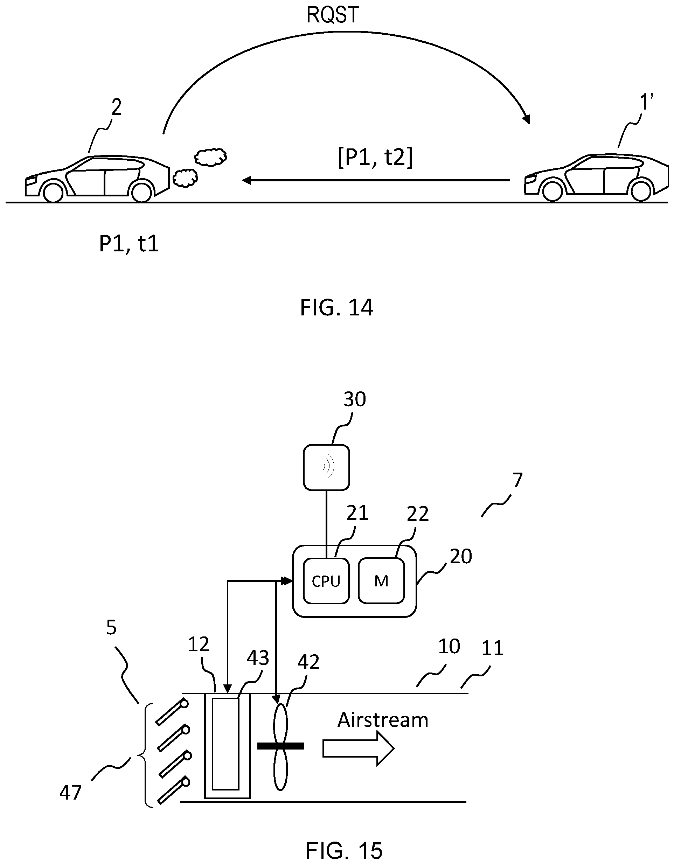

FIG. 14 shows a schematic illustration of a fleet including vehicles 1' and 2 in accordance with various embodiments. At a time t1 the demand vehicle may be at a position P1. The method may include determining which other vehicles of the fleet have a route that pass through or close by (e.g., within the pre-determined radius) of position P1 at a future time t2, which may include determining that at least one supply vehicle 1' passes at or close to the position P1 at a time t2. In one example, the determining includes sending a request RQST and may further include receiving route data or position confirmation for a future time, e.g., in the form of "[P1, t2]". The method may further include sending the request for air treatment from the demand vehicle 2 to the supply vehicle 1' at a time before t2 (e.g., at a time t1) and carrying out the air treatment by the supply vehicle 1' at a time t2. Thereby, air at position P1 may be treated and the air quality improved even if no supply vehicles are within the pre-determined radius at the time t1 in which the demand vehicle 2 passes at the position P1. The determining which other vehicles of the fleet have a route that pass through or close by of position P1 at a future time t2 may include determining limiting time t2 to within a pre-determined time frame or time slot, e.g., to a same day, or to a same period of time, for example within a period of time selected from 1h to 24h (endpoints included), for example within 24h.

FIG. 15 shows a schematic of another embodiment of emission regulation system 7 for cleaning environmental air. The schematic is simplified for easier explanation of the disclosure. The emission regulation system 7 may include an airflow control device 11. The emission regulation system 7 may include a holder 12 configured to receive a filter 43. As can be seen, when air filter 43 is installed in the holder 12 it is in stream a blower 42 (e.g., a fan) of a vehicle 1 in an airstream when air is flowing through the filter 43. The emission regulation system 7 may include a computer memory 22 storing instructions to cause the microprocessor 21 to carry out the method in accordance with various embodiments. Further to the shutter 47, emission regulation system 7 of FIG. 16 may include an additional shutter and/or a bypass. The emission regulation system 7 may further include the filter 43. A blower may also be dispensed with, and the airflow through the filter may be generated when the vehicle 1 is in movement.

Various embodiments of the disclosure enable a vehicle to receive emissions, such as particle emission, compensation from other vehicles. Compensation may also be at a same position, another position, or another time for the same position. Compensation performed at the vicinity of the vehicle can avoid pollution peaks effectively creating a cleaner vehicle, when the neighboring cars, or cars passing right before or shortly after at the same position, of a fleet may provide the necessary air treatment.

The present disclosure allows for optimized air treatment where it makes the greatest impact, while being very efficient so that less or air treatment is done where it is less or not necessary thereby reducing environmental impact of vehicles. The provision of compensation by other vehicles also enables payments which is a driver for adoption and use of environmental air cleaning.

## Claims

1. A method (200) of treating environmental air comprising:
- determining (205) that there is an air treatment demand at a demand vehicle (2) by determining (210) that there is a local treatment requirement of the demand vehicle (2) which is unsatisfied;
- sending (230), by the demand vehicle (2), a request (RQST) for air treatment by a communication interface (30) to a supply vehicle (1');
- receiving (240), by the demand vehicle (2), an acknowledgement (ACK) from the supply vehicle (1');
wherein determining (205) that there is an air treatment demand further comprises determining (220) that a traffic density at a demand vehicle's surroundings is above a pre-determined density.

2. The method (200) of claim 1, wherein determining (220) a traffic density within a pre-determined distance from a demand vehicle (2) is, or is based on, a number of vehicles (C1, C2, C3) within the pre-determined distance (DIST1).

3. The method (200) of claim 1 or claim 2, wherein determining (220) a traffic density within a pre-determined distance (DIST1) from a demand vehicle (2) further comprises determining (222) that the vehicle speed and/or the speeds of the surrounding vehicles (C1, C3) are under a pre-determined minimum speed (V_{MIN}).

4. The method (200) of any of the previous claims, wherein determining (220) a traffic density within a pre-determined distance from a demand vehicle (2) comprises determining (224) that at least a pre-determined number (N2) of vehicles (C1, C2) within a pre-determined distance (DIST1) are platooning with the demand vehicle (2).

5. The method (200) of any of the previous claims, wherein determining (220) a traffic density within a pre-determined distance from a demand vehicle (2) comprises determining (226) that at least a pre-determined number (N3) of vehicles (C2, C3) within a pre-determined distance (DIST1) have a residence time greater (t_{dwell}) than a pre-determined threshold (t_{LIM}).

6. The method (200) of any of the previous claims, wherein determining (220) a traffic density within a pre-determined distance from a demand vehicle (2) further comprises:
receiving emission data from the vehicles (C1, C2, C3) within a pre-determined distance (DIST1); and
determining (228) that a sum of emissions from the vehicles (C1, C2, C3) within is above a pre-determined emissions limit (E_{LIM}).

7. The method (200) of any of the previous claims, wherein determining (220) that a traffic density at a demand vehicle surroundings is above a pre-determined density is performed on the demand vehicle (2) or on the supply vehicle (1').

8. The method (200) of any one of the previous claims, wherein determining (220) that a traffic density at a demand vehicle surroundings is above a pre-determined density is performed on a remote processor, such as, of a cloud (6), wherein
the cloud receives traffic data over time and the processor determines that for there is a high number of vehicle passes of vehicles a position of the demand vehicle (2).

9. The method (200) of any of the previous claims, wherein determining (210) that there is a local treatment requirement of the demand vehicle (2) which is unsatisfied is performed on the demand vehicle (2), for example, by comparing a nominal emission rate of the demand vehicle (2) with a pre-determined required emission limit.

10. The method (200) of any the previous claims, further comprising on the supply vehicle (1'):
receiving (110) a request for treatment comprising receiving data indicative of a demand (DEM1), and
determining (120) that an air treatment system (10) of the supply vehicle (1') has additional treatment capacity available comprising determining that the additional treatment capacity (CAP1) is greater or equal to the demand (DEM1).

11. The method of claim 10, further comprising, by the supply vehicle (1'), controlling (240) air treatment system (10) to increase treatment capacity, when the determination is positive, wherein, optionally, controlling (140) the air treatment system (10) to increase treatment capacity is by the additional treatment capacity (CAP1).

12. The method (200) of any the previous claims, further comprising:
recording (150), on a local memory of the supply vehicle (1') and/or on a local memory of the demand vehicle (2), data indicative of the additional treatment capacity utilized, optionally, wherein the acknowledgement (ACK) comprises data indicative of an additional treatment capacity (CAP1).

13. An emission regulation system (7), for a vehicle, the system (7) comprising:
- a holder (12) for receiving a replaceable air filter (43);
- an airflow control device (10);
- a control circuit (20):
- a communication interface (30) configured to wirelessly send and receive commands external to the vehicle (1) and operably coupled to the control circuit (20);
wherein the control circuit (20) is configured to:
receive a request (RQST) for air treatment, which request (RQST) originate external to the vehicle (1);
determine whether current emissions of the vehicle (2) are below a pre-determined limit and whether there is available capacity;
if the request is received, and if it is determined that current emissions of the vehicle (2) are below the pre-determined limit and there is available capacity,
control the airflow control device (10) to utilize at least part of the available capacity,
wherein the control circuit (20) is further configured to control the airflow control device (10) to increase treatment capacity.

14. The emission regulation system (7) of claim 13, wherein the control circuit (20) is further configured to determine (202) if there is treatment demand when a local treatment requirement is unsatisfied.

15. The emission regulation system (7) of claim 13 or claim 14, wherein the control circuit (20) is further configured to, if there is a treatment demand, via the communication interface (30), send a request (RQST) for remote treatment capacity and receive an acknowledgment (ACK); and optionally provide on a memory data indicative of the additional treatment capacity utilized.

16. The emission regulation system (7) of any one of claims 13 to 15, wherein the control circuit (20) is further configured to:
determine whether current emissions of the vehicle (1) exceeds a pre-determined limit;
if determined that the current emissions of the vehicle (1) exceeds a pre-determined limit,
send a request (RQST) for air treatment by a communication interface (30) to a supply vehicle (1'); and
optionally, receive an acknowledgement (ACK) from the supply vehicle (1').

17. The emission regulation system (7) of any one of claims 13 to 16, wherein the control circuit (20) is further configured to:
determine whether a traffic density at surroundings of vehicle (1) is above a pre-determined density, and
control the on-board air treatment system to utilize at least part of the available capacity only if the determination is positive.

18. The emission regulation system (7) of any one of claims 13 to 17, wherein the control circuit (20) is further configured to:
determine whether a traffic density at surroundings of vehicle (1) is above a pre-determined density, and
determine whether there is additional available capacity; and
if the request is received, and
if both determinations are positive, control the airflow control device (10) to utilize at least part of the additional available capacity.

19. The air treatment system (10) of any one of claims 13 to 18, wherein the acknowledgement (ACK) comprises data indicative of a cost rate of the additional treatment capacity,
and the control circuit (20) further being configured, before to control the airflow control device (10) to increase treatment capacity, to receive a request confirmation (CONF).

20. A vehicle comprising the emission regulation system (7) of any one of claims 13 to 19.

21. A fleet (50) of two or more vehicles (2, 1') according to claim 20, the two or more vehicles (2, 1') operably communicable with each other, wherein a first vehicle (2) is configured to requesting a second vehicle (1') to provide air treatment, and wherein the second vehicle (1') is configured to receive the request and control an air treatment system of the second vehicle (1') to increase treatment capacity.
